# EUROPEAN PATENT APPLICATION

(11) **EP 2 087 990 A1**
(43) Date of publication of application: **12.08.2009**
(21) Application number: 08002147.0
(22) Date of filing: 06.02.2008
(51) Int. Cl.: B29C 70/44

(54) **Vacuum bagging of composite materials**

(71) Applicant: Danmarks Tekniske Universitet - DTU, 2800 Kgs. Lyngby (DK)
(72) Inventor: Lystrup, Aage Scheel, 4000 Roskilde (DK)
(74) Representative: Sundien, Thomas

(57) **Abstract**

This invention relates to a method for manufacturing a composite part and a composite part obtained thereby, comprising the steps of laying out a number of material layers (101), covering the layers with an outermost vacuum foil (104) along with applying one or more internal vacuum foils (301) in between some of said material layers. Hereby fiber bridging, porosities and wrinkles in the finished component are avoided which are otherwise inherent problems especially for thick walled components.
The invention further relates to the use of multiple vacuum foils in composite manufacture, where some of the vacuum foils are made of different materials.

## Description

### FIELD OF THE INVENTION

The present invention relates to a method for the manufacture of composite parts or components comprising laying out a number of material layers and covering them with a vacuum foil. The invention furthermore relates to specific uses of vacuum foils during the manufacture of composites.

### BACKGROUND

Components made of composite materials play an increasing role in everyday life and are increasingly used for structural components, where the possibility of obtaining parts with high stiffness and strength properties yet low weight are important or advantageous.

Composite parts are very often built up as fiber reinforced laminates, where several layers of fibrous material layers are laid out, joined with resin and cured. Generally, the lay-up can either be wet or dry, i.e. the resin is applied in fluid form to the laid-out fibrous plies or is present in the material layers together with the fibers in a non-consolidated, uncured or partial uncured state, respectively.

However, when laying up fiber fabrics for three-dimensional shaped components, problems with porosities, fiber bridging, delamination, resin rich areas and fiber wrinkles arise especially at concave and convex geometries. These problems are to a large extent due to the considerable material movement taking place during consolidation and debulking of the laminate as the laminate thickness is considerably reduced from the thickness of the laid-out layers to the final thickness of the fully consolidated composite. This again leads to that the fiber orientation and hence the overall material properties and quality of the final component are only determined with some uncertainty and are not fully controllable.

Also, difficulties in the manufacturing process arise when manufacturing components with vertical or highly sloped surfaced. As the individual plies are difficult to keep in place during the lay-up, the material parameters of the finished component are equally difficult to control.

These problems can be reduced if a thick-walled component is built up in more process steps. Fiber materials are laid-up and debulked and consolidated in more steps; e.g. for each time 4-6 mm of material is laid-up. The debulking is done by vacuum bagging the material, pulling a vacuum underneath the vacuum bag and consolidating and making the 4-6 mm thick laminate by the vacuum (or autoclave) consolidation process. Afterwards, the vacuum bag is removed, and more materials for the next 4-6 mm of component thickness are laid-up on top of the first part, vacuum bagged again and processed by a second process cycle. The stepwise procedure is continued until the desired thickness is obtained. In most cases the process is performed at elevated temperature for melting (or curing) the polymer matrix material. Therefore, the many process steps are both labor intensive and use more energy. If the temperature is not increased during each process step, a stack of dry fiber fabrics will for the most composites show a considerable 'spring back' when removing the vacuum bag, i.e. will deform back to a larger thickness thus leaving the method ineffective.

Another way of avoiding fiber bridging is to lay-up surplus of material at a certain position of the component by use of a help-tool with a different geometry than the final part as described in US 5292475. However, this method is disadvantageous in requiring at least one extra mould specific for every component geometry as well as prolonging the manufacturing process, thereby increasing the manufacturing time and costs considerably.

Finally, material plies can more easily be made to follow the shape of a mould with vertical or highly sloped surfaces by stitching the individual plies together every few plies and thereby keeping the layers in their somewhat correct position during lay-up. However, apart from being imprecise, this method is also making the manufacturing process more labor intensive and thus more expensive and time consuming. Further, the stitching does not solve the problem completely as a material layer will still tend to 'hang' in between the stitches, yielding variations in the laminate design and hence in the physical parameters of the finished component.

### OBJECT AND SUMMARY OF THE INVENTION

It is therefore an object of the present invention to describe a method for the manufacture of composite components, where at least some of the above-mentioned problems are solved or reduced.

According to one aspect, the present invention relates to a method for manufacturing a composite part comprising the steps of laying out a number of material layers, covering the layers with an outermost vacuum foil and applying one or more internal vacuum foils in between some of the material layers.

In an embodiment, a negative pressure is applied under at least one of said internal vacuum foils prior to laying out material layers on top of said internal vacuum foil.

Hereby is generally obtained that the material is laid out in positions closer to their final position in the cured and/or consolidated composite part, whereby the material movement or transport during cure or consolidation is minimized. This in turn implies that wrinkled fibers, fiber bridging and resin rich areas or porosities, especially near or around corners or edged, can be avoided in the final components leading to improved physical properties and better control of the properties of the finished composite. These advantages are thus more noticeable for relatively thick laminates, where the material is to be moved considerably to be consolidated.

A further advantage is that component corners can be manufactured as convex or concave (internal or external) with the same optimal result, whereby a higher degree of freedom in the design/manufacturing process is obtained as one can choose freely between having an interior or exterior mould.

Also, the described method is advantageous when manufacturing composite components of curved or complex shapes in that the extra internal vacuum foils help keeping the material layers in place during the lay-up and ease the draping which otherwise can be difficult or impossible on very curved or sloped surfaces. More precise geometries especially for three-dimensional curved composites are therefore obtainable. The otherwise often necessary extra measures of intermediately stitching the layers together are thus rendered superfluous. Again, this leads to a better control of the physical properties of the finished composite part.

In a further embodiment, at least one of said internal vacuum foils is of a different material than said outermost vacuum foil, and in yet further embodiments the method for manufacturing a composite part according to the above further comprises at least partly melting and/or dissolving said internal vacuum foil(s). Hereby it is obtained that the internal vacuum foils become an integrated part of the final composite part. Further, only one final curing or consolidation in e.g. an oven or autoclave is needed, whereby the extra process steps of intermediate debulking with heating or autoclaving several times are rendered unnecessary, thereby resulting in a higher process rate (shorter production time), lower energy use and considerably reduced manufacturing costs.

A further important advantage is that the methods described above are all compatible with existing technology, and no adaptations are therefore needed.

Also, already known foils of materials (although not known to be used in the way described here) are available and can be applied to the described method. The methods are thus readily applicable.

In another embodiment of the above method, the composite part is built up in a number of stages, each step comprising laying out one or more material layer(s), covering the material layer(s) with a vacuum foil and applying a negative pressure under the vacuum foil.

According to another aspect, the present invention relates to a composite part characterized by being manufactured by the methods according to the previously described. Hereby is obtained a component with more precise and improved physical properties as also mentioned before. Other advantages are as mentioned above to the manufacturing method.

According to further aspects, the present invention relates to the use of a vacuum foil of thermoplastic material for vacuum bagging a composite part with thermoplastic matrix material during its manufacture, and similarly to the use of a vacuum foil of a material dissolvable by thermosetting resin for vacuum bagging a composite part with thermosetting matrix material during its manufacture. For instance in the case where polyester or vinyl ester are used as matrix material a vacuum foil dissolvable by styrene is advantageous in that the vacuum foil then dissolves during the resin infusion/impregnation and becomes an integrated part in the final component, however maintaining the functioning of a vacuum foil until then.

The invention further relates to the use of multiple vacuum foils during manufacture of a composite part, where according to a further embodiment at least two of said multiple vacuum foils are of different materials.

The advantages of these embodiments directed to the different uses of vacuum foils are as mentioned previously to the manufacturing methods.

### BRIEF DESCRIPTION OF THE DRAWINGS

In the following, different embodiments of the invention will be described referring to the figures, where
figure 1 illustrates the manufacture of a composite according to prior art,
figure 2 schematically illustrates some of the material problems which occur frequently when manufacturing laminates of three-dimensional shapes according to prior art,
figure 3 illustrates a laminate manufacturing method according to one embodiment of the invention,
figure 4 shows another laminate manufacturing method according to an embodiment of the invention, and
figure 5 illustrates in a cross-sectional view the manufacture of a composite component with an internal fiber bundle according to one embodiment of the present invention.

### DESCRIPTION OF PREFERRED EMBODIMENTS

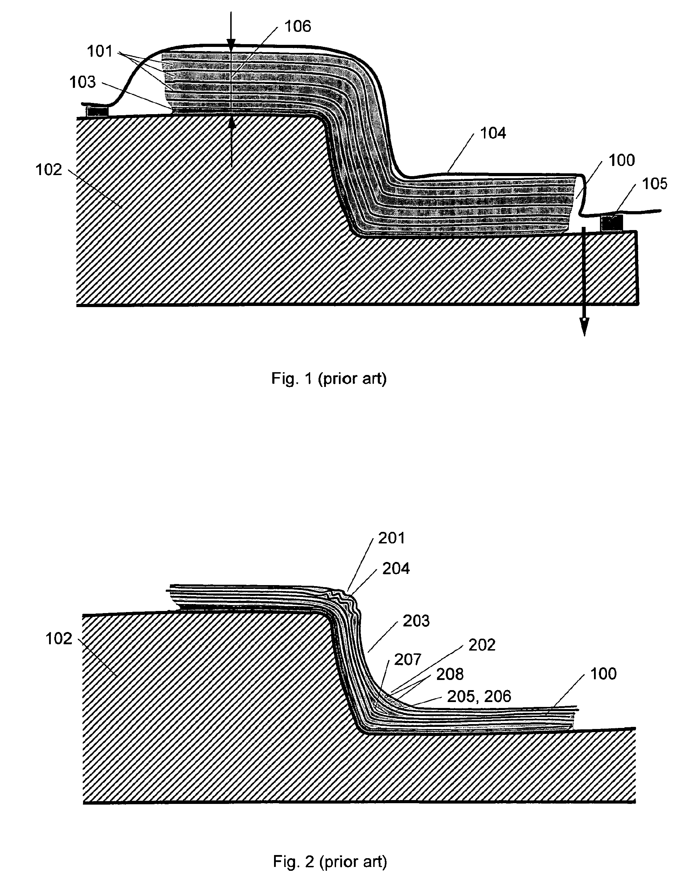

Figure 1 illustrates the manufacture of a composite part 100 according to prior art. In general, a number of material plies or layers 101 are laid out or distributed in a mould 102 of a shape corresponding to the desired shape of the finished component or part 100. Only a few plies are drawn in the figure for clarity reasons, but a relatively thick laminate can easily comprise about 50-100 plies. The mould 102 is most often treated to ensure that the composite part can slip or loosen from the mould after curing, e.g. by waxing the mould or by application of a slip film or some release agent. Also, in some applications a gel coat 103 may be applied as a first layer for obtaining special surface characteristics of the finished product. The material layers 101 need not extend all the way through the laminate, but are generally added where needed in varying amounts and orientations to obtain the desired properties and/or geometry of the final component. Also, the plies are often of different materials, and a laminate layer 101 can also take the shape of pieces of core materials such as balsa wood or foam material or bundles of fibers (not shown).

The different material layers 101 (including cores and bundles) are covered with a vacuum bag or vacuum foil 104 which is sealed 105 to the mould 102. A negative pressure is then applied under the vacuum foil 104 in order to remove voids in the laminate and compact the layers. The resin matrix material is either applied to the laid-out material layers 101, e.g. by vacuum infusion or injection, or is a part of the material layers (pre-pregs or post-pregs). In the former case, the resin is often injected via a number of injection channels placed below the vacuum foil often together with a resin distribution layer, and the composite is then left to cure. This method also known as resin infusion and/or resin transfer moulding (RTM) is most commonly used for the manufacture of thermosetting matrix composites, but is also applicable by the use of special reactive thermoplastic matrix materials.

In contrast, pre-pregs or post-pregs are most commonly used for thermoplastic matrix composites due to the high viscosity of the thermoplastic polymers most often used, e.g. polyethylene (PE), polypropylene (PP), PA, PET, etc. After having applied a negative pressure to the material layers under the vacuum foil, the laminate is consolidated by melting the resin at increased temperatures using an oven or by autoclaving. After partly or fully curing or consolidating, the vacuum bag 104 is removed and the laminate is removed from the mould 102.

The vacuum foil 104 therefore has to be of a material which can sustain the chemical and mechanical environment present (e.g. high temperatures or aggressive resins) during the manufacturing process without disintegrating and is also chosen with a view to other parameters such as transparency, high elasticity, good sealing properties to the sealing tape, fire retardant properties, etc. depending on the circumstances. Vacuum foils of different thermoplastic materials such as polyethylene (PE), polypropylene (PP) or nylon based polymers (PA) are often used in the manufacture of thermosetting matrix composites as the process temperatures here are not that high. Such foils on the other hand would melt during the manufacture of thermoplastic matrix composites, where then vacuum bags of e.g. silicone, polytetraflouroethylene (PTFE) and polyimide are often used instead.

As mentioned in the introduction, a great disadvantage of the above-described methods is connected to the high compaction and considerable decrease of component thickness 106 which takes place from the initial lay-up of material layers 101 to the final component which hopefully is fully consolidated. A rule of thumb indicates the thickness reduction for pre-preg and post-preg with thermoplastic matrix material to be approximately 3 to 2 to 1. That is, an initial lay-up thickness of 3 units is compacted into a thickness of 2 when vacuum bagged and is consolidated into a final thickness of 1. The fibrous material in the different layers along with the matrix material is thus transported considerably distances during debulking and consolidation.

In figure 2, some of the material problems arising from this considerable compaction during manufacture are schematically illustrated. Here, the same laminate 100 as in figure 1 is sketched in its final state after consolidation. The material problems arise especially at more complicated three-dimensional laminate shapes such as at external or convex corners 201, internal or concave geometries 202 and on vertical or highly sloped 203 surfaces as outlined in the figure. At external corners 201 the excess material may result in wrinkled fibers 204 and imprecise laminate material properties along with a non-optimal outer appearance. At the internal corner 202 the opposite is the case in that there is not enough material to fully get into the corner. Here, fiber bridging 205 may very well occur as well as resin rich area 206 or porosities, small voids 208 or even delamination 207 depending on the amount of matrix material. This incomplete consolidation again results in reduced quality of the finished product.

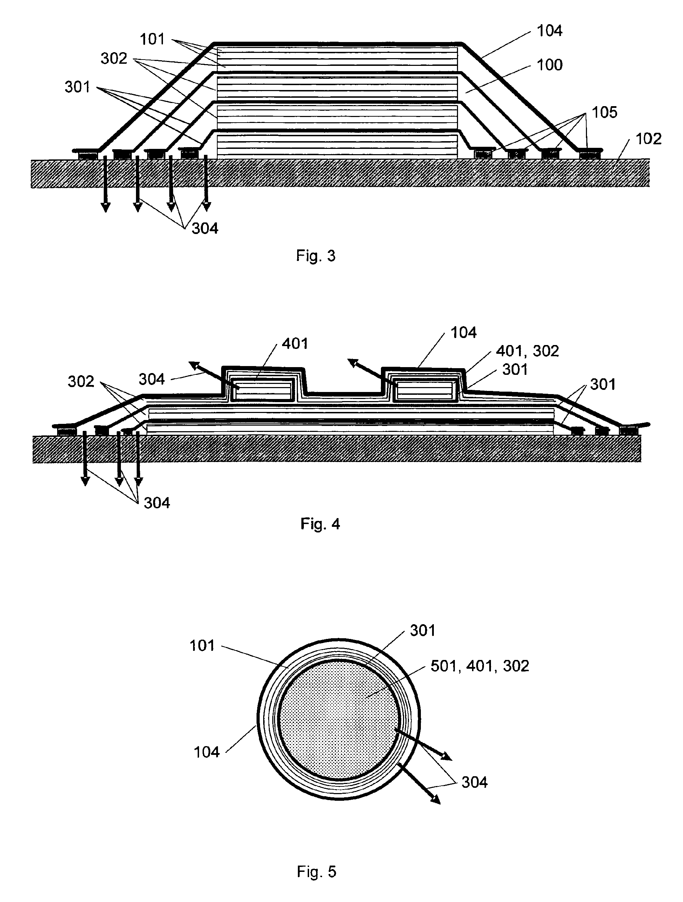

These problems have all been at least greatly reduced by applying the laminate manufacturing method illustrated in figure 3. The overall principle according to one embodiment of the invention is here illustrated on a simple flat composite part 100 shown after lay-up and vacuum bagged.

Instead of vacuum bagging the full stack of material plies 101 as conventionally done, the general concept according to the present invention is to use a number of internal vacuum foils 301 in the lay-up of the laminate. The layers of the laminate 101 are laid up in stages or groups 302 separated by internal vacuum foils 301 so that vacuum or a negative pressure (as illustrated by the arrows 304) is applied to each stage or group 302 in turn before laying up the next group of layers on top of the foregoing. The vacuum foils 301 used in the interior of the laminate 100 are made of a material which melts, dissolves or in other ways transforms and becomes an integrated part of the final composite component when heated and/or cured. The outermost vacuum bag or foil 104 is of a conventional type and is removed after the final consolidation and cure as usually. Heating in an oven, autoclaving or resin injection or infusion can then advantageously be performed in one final process step for the entire component. The groups of material plies need not be of the same size or thickness.

By the above-described application of intermediate vacuum bagging, the material layers are generally laid out in positions closer to their final positions and the necessary material transport during consolidation is therefore greatly reduced. Hereby the previously described problems of e.g. wrinkled fibers and fiber bridging are, if not completely avoided, then at least greatly reduced. Furthermore, the material layers can be laid out in a far more precise way, especially on very curved or sloped surfaces as the groups of material layers are kept in place by the internal vacuum foils. This also results in minimal 'floating' of the material layers during consolidation which otherwise leads to uncontrollable changes in the material properties.

An internal vacuum foil 301 could for instance be made of the same material as the matrix material which leads to a complete or near complete 'disappearance' of the vacuum foils in the final composite as the material of the foil will then simply flow into the neighboring plies and blend with matrix material otherwise present. Thus, in the case of thermoplastic matrix composites, already available foils such as for instance those sold under the name of Wrightlon or Wrightlease from the company Airtech and of materials such as PE, PVA, PP, PMP or PA's to mention some can be readily applied. These foils are normally used as for instance slip films or vacuum bags in the manufacture of thermosetting matrix composites, where the process temperatures are considerably lower than for thermoplastic composites, and the foils will therefore stay intact. The exact contrary is desirable when using the foils as internal vacuum foils according to the invention. A foil of another thermoplastic material that will also melt during consolidation of a thermoplastic composite is also possible. Here, the melted internal vacuum foil will in most cases be present in the final component in small lumps or pieces in between the other matrix material.

In the case of thermosetting matrix composites such as e.g. polyester or vinylester, the internal vacuum foils can e.g. be chosen of a material that is dissolved by styrene, which is present in the aforementioned thermosettings. Internal vacuum foils of e.g. latex and/or butyl rubber would dissolve during the impregnation/infusion, leaving the molecules of the former foil to be present in the final composite as particles in the cured matrix. The particles may attain sizes on different scale (macro-, micro- or even nano-scale) depending on the circumstances.

In figures 1-3, the material layers are laid out in an open mould to which the vacuum foils are sealed. In another embodiment, a mould as such need not be present in the manufacture. The material layers could for instance be placed on a metal plate which ends up being a part of the final composite component. Another example of a lay-up of material layers without a mould is illustrated in figure 5 described in more detail below.

The manufacturing method described above is particularly advantageous for the manufacture of relatively thick and/or curved or angular composite parts or components. The method could for instance be used in the manufacture of composite parts such as parts for wind turbine blades or a wind turbine tower, panels for vehicles such as trucks or military vehicles, where good ballistic properties are desirable, panels or hulls for ships, airplane parts, etc.

According to another embodiment of the invention illustrated in figure 4, some or all of the groups 302 of material layers 101 are vacuum bagged separately, completely enwrapped in a meltable and/or dissolvable internal vacuum foil 301. When a negative pressure is applied to the group under its vacuum foil 301 (for instance from one of its ends) as illustrated by the arrows 304, the group then constitutes an individual 'package' 401 which can optionally be moved around and placed in between other material groups, for instance for constituting local stiffeners or the like in the composite component 100. Such individual 'packages' 401 can optionally be laid out and vacuum bagged away from the mould 102 of the component.

Also, as mentioned previously the material layers 101 are generally not restricted into being of flat two-dimensional shapes, but are to be understood more broadly as also covering e.g. core material in various shapes or bundles of fibers. In figure 5 is (in a cross-sectional view) illustrated how a composite component with an internal fiber bundle such as a shaft or a club or the like can be manufactured according to one embodiment of the present invention. In this embodiment, a bundle of fibers 501 constituting a material group 401 is first enwrapped in an internal vacuum foil 301, and a negative pressure is applied under the foil. Thereafter layers of fibrous material 101 are wrapped around the fiber bundle for reducing the risks of splitting and/or buckling of the internal fibers. A vacuum foil 104 of conventional type is placed outermost, vacuum is applied and the component is consolidated.

It should be noted that the above-mentioned embodiments illustrate rather than limit the invention, and that those skilled in the art will be able to design many alternative embodiments without departing from the scope of the appended claims. In the claims, any reference signs placed between parentheses shall not be construed as limiting the claim. The word 'comprising' does not exclude the presence of other elements or steps than those listed in a claim.

## Claims

1. A method for manufacturing a composite part comprising the steps of laying out a number of material layers and covering the layers with an outermost vacuum foil, **characterized by** applying one or more internal vacuum foils in between some of said material layers.

2. A method for manufacturing a composite part according to claim 1, where negative pressure is applied under at least one of said internal vacuum foils prior to laying out material layers on top of said internal vacuum foil.

3. A method for manufacturing a composite part according to claims 1 or 2 where at least one of said internal vacuum foils is of a different material than said outermost vacuum foil.

4. A method for manufacturing a composite part according to any of the preceding claims, further comprising at least partly melting said internal vacuum foil(s).

5. A method for manufacturing a composite part according to any of the preceding claims, further comprising at least partly dissolving said internal vacuum foil(s).

6. A method for manufacturing a composite part according to any of the preceding claims, where said composite part is built up in a number of stages, each step comprising laying out one or more material layer(s), covering said material layer(s) with a vacuum foil and applying a negative pressure under said vacuum foil.

7. A composite part **characterized by** being manufactured by the methods according to the claims 1-6.

8. Use of a vacuum foil of thermoplastic material for vacuum bagging a composite part with thermoplastic matrix material during its manufacture.

9. Use of a vacuum foil of a material dissolvable by thermosetting resin for vacuum bagging a composite part with thermosetting matrix material during its manufacture.

10. Use of multiple vacuum foils during manufacture of a composite part.

11. Use of multiple vacuum foils according to claim 10, where at least two of said multiple vacuum foils are of different materials.
